# EUROPEAN PATENT SPECIFICATION

(11) **EP 1 160 115 B1**
(45) Date of publication and mention of the grant of the patent: **01.09.2004**
(21) Application number: 00127676.5
(22) Date of filing: 18.12.2000
(51) Int. Cl.: B60K 23/02, B60T 11/18, G05G 1/14

(54) **Antivibration device for the clutch pedal of a motor vehicle**
Schwingungsdämpfungseinrichtung für ein Kraftfahrzeug-Kupplungspedal
Dispositif antivibratoire pour pedale d'embrayage de véhicule

(30) Priority: 02.06.2000 IT TO000094
(43) Date of publication of application: 05.12.2001
(73) Proprietor: S.I.V. S.p.A., 10040 Volvera (Torino) (IT)
(72) Inventor: La Rosa, Giacomo, 90144 Palermo (IT); Cavaglia, Renato, 10040 Volvera (Torino) (IT)
(74) Representative: Di Francesco, Gianni

(56) References cited:
- EP-A- 0 896 162
- DE-U- 7 918 243
- US-A- 5 752 780

## Description

The present invention refers to an anti-vibration and anti-noise device for the clutch pedal of a motor vehicle, where the clutch is controlled by means of a push rod, operated by the pedal itself.

The utilisation of hydraulic controls in operating clutches in modern motor vehicles, has put into evidence a problem of vibration and noise transmission from the engine compartment, since the control is no longer transmitted by means of a cable is disclosed in DE-A-79 18 243 U, but by means of the push rod of the piston of said hydraulic control.

It is an object of the present invention to provide a device intended to isolate the push rod of the hydraulic control from the clutch pedal, in order to prevent the vibrations from being transmitted when the gear is changed.

Said object is achieved by means of a vibration-dampening device for the clutch pedal of a motor vehicle, presenting the characteristics of claim 1.

Additional characteristics and advantages will become clear from the following description referring to the appended drawings provided as non-restrictive example, and in which:

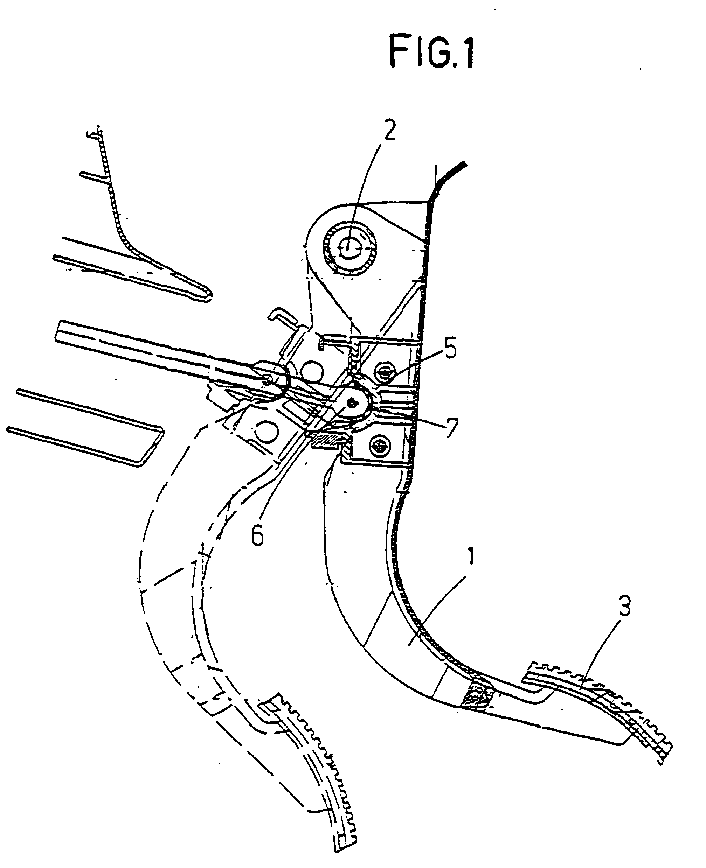

figure 1 is a side view of a clutch pedal provided with the device according to the invention;

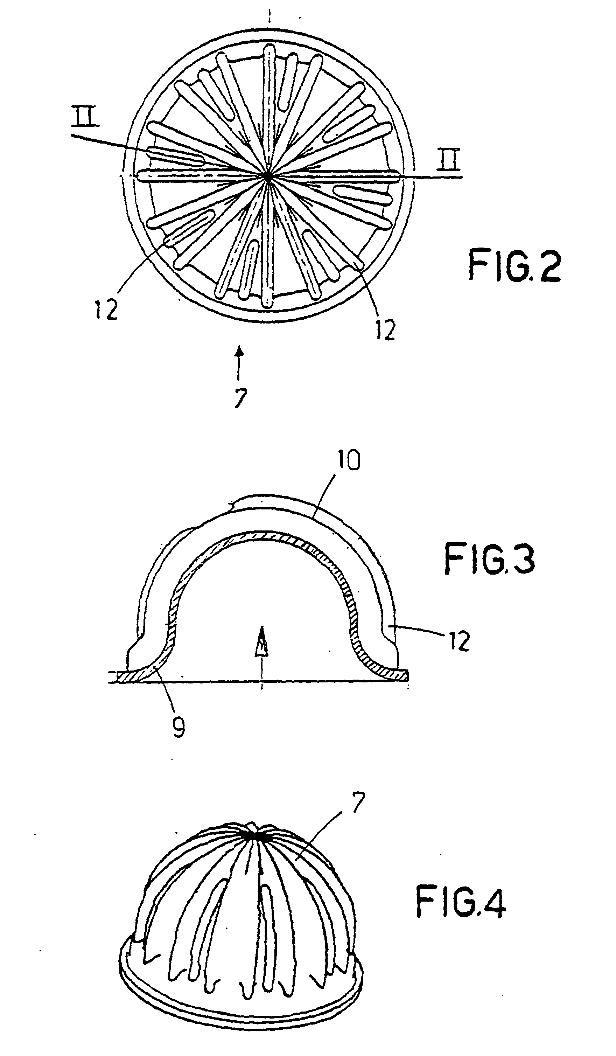

figure 2 is a top view of the device according to the invention consisting of an elastic cup-shaped bush;
figure 3 is a section view of the bush along the line II-II in figure 2, and
figure 4 is a perspective view of the bush in figures 2 and 3.

With reference to the figures, reference number 1 indicates a clutch pedal of a motor vehicle, presenting one hand hinged at 2 and being provided with a support 3 for the foot at the other end. The pedal 1 presents a seat 5 for the push rod 6 of an hydraulic control for the clutch (not shown).

Inside the seat 5 there is, according to the invention, an elastic cup-shaped bush 7. The bush advantageously consists of a metal part 9, which is in contact with the push rod 6, and of a part 10 made of elastic material, preferably rubber vulcanised on it, which rests on the seat 5 in the pedal 1. The elastic part 10 presents advantageous ribs 12 on its external surface, the wideness and dimensions of the ribs being studied in order to be in accordance to the frequencies of the vibrations coming from the push rod, so that the vibrations are almost completely nullified, while the noise that could be transmitted inside the passenger compartment is reduced as well. It is obvious that the bushes shall be adapted to the different types of motor vehicle on which they are used. This is possible by means of varying the shape and wideness of said ribs 12 until the desired effect is achieved.

## Claims

1. A vibration-damping device for a clutch pedal (1) of a motor vehicle consisting of an elastic cup-shaped bush (7)for a push road (6) of a piston, which is part of an hydraulic control of the clutch, located in a seat (5) provided on said pedal and **characterised in that** said bush (7) consists of an inner metal part (9) and of an external part made of elastic material (10) and is located inside said seat (5), between the pedal (1) and the push rod (6).

2. Device as claimed in claim 1 **characterised in that** the elastic material (10) presents ribs 12 on its external surface.

3. Device as claimed in claim 2 **characterised in that** the shape of the ribs (12) varies as a function of the vibrations to be absorbed.

## Patentansprüche

1. Schalldämpfungseinrichtung für ein Kupplungspedal (1) eines Kraftfahrzeugs mit einer elastischen tassenförmigen Buchse (7) für einen Schubstange (6) eines Kolbens, die Teil einer hydraulischen Kontrolle der Kupplung ist, die in einer Aufnahme (5) angeordnet ist, die an dem Pedal bereitgestellt ist, und **dadurch gekennzeichnet, dass** die Buchse (7) aus einem Innenmetallteil (9) und aus einem Außenteil aus elastischem Material (10) besteht und in der Aufnahme (5) zwischen dem Pedal (1) und der Schubstange (6) angeordnet ist.

2. Einrichtung nach Anspruch 1, **dadurch gekennzeichnet, dass** das elastische Material (10) Rippen (12) auf seiner Außenfläche aufweist.

3. Einrichtung nach Anspruch 2, **dadurch gekennzeichnet, dass** die Form der Rippen (12) entsprechend den aufzuhebenden Schwingungen veränderlich ist.

## Revendications

1. Dispositif amortisseur de vibrations pour pédale d'embrayage (1) d'un véhicule à moteur, composé d'une douille élastique en forme de coupe (7) pour un poussoir de soupape (6) d'un piston qui fait partie d'une commande hydraulique de l'embrayage, située dans un logement (5) prévu sur ladite pédale et **caractérisé en ce que** ladite douille (7) se compose d'une pièce métallique intérieure (9) et d'une pièce extérieure en matière plastique (10) et se trouve à l'intérieur dudit logement (5), entre la pédale (1) et le poussoir de soupape (6).

2. Dispositif selon la revendication 1, **caractérisé en ce que** la matière élastique (10) présente des renforts 12 sur sa surface extérieure.

3. Dispositif selon la revendication 2, **caractérisé en ce que** la forme des renforts (12) varie en fonction des vibrations à absorber.
